# EUROPEAN PATENT APPLICATION

(11) **EP 0 636 679 A1**
(43) Date of publication of application: **01.02.1995**
(21) Application number: 94201912.6
(22) Date of filing: 02.07.1994
(51) Int. Cl.: C10L 5/48, B03B 9/06

(54) **Solid fuel from shredder waste**

(30) Priority: 28.07.1993 BE 9300783
(71) Applicant: GALLOOMETAL, naamloze vennootschap, B-8930 Menen (BE)
(72) Inventor: Vandeputte, Antoine, B-8930 Menen (BE)
(74) Representative: Donné, Eddy

(57) **Abstract**

1. Fuel, characterized in that it mainly consists of what is called shredder waste from which the inert materials which are originally present in it, at any rate at least a number of the fine inert materials (3), as well as chlorous materials, at any rate at least the highly chlorous materials (4), have been mostly eliminated.

## Description

The present invention concerns a fuel.

Particularly, the invention concerns a fuel which is suited as a fuel for industrial furnaces.

In particular, it concerns a fuel which is eligible to be combusted in carbonizing furnaces.

An aim of the invention hereby consists in that such furnace fuel can be produced from waste.

Another aim of the invention consist in offering a fuel from waste with sufficient efficiency of combustion, a low ash content after the combustion and a low chlorine emission during the combustion so as to be used in furnaces in an ecologically sound manner.

To this aim the invention concerns a fuel, characterized in that it mainly consists of what is called shredder waste from which the inert materials which are originally present in it, at any rate at least a number of the fine inert materials, as well as chlorous materials, at any rate at least the highly chlorous materials, have been mostly eliminated.

Shredder waste is, as is known, waste which is produced during the processing of scrap in what is called a shredder or hammer mill.

In order to better explain the characteristics of the invention, the following example is given without being limitative in any way, describing how the fuel is obtained according to the invention, is composed respectively, with reference to the only accompanying schematic drawing.

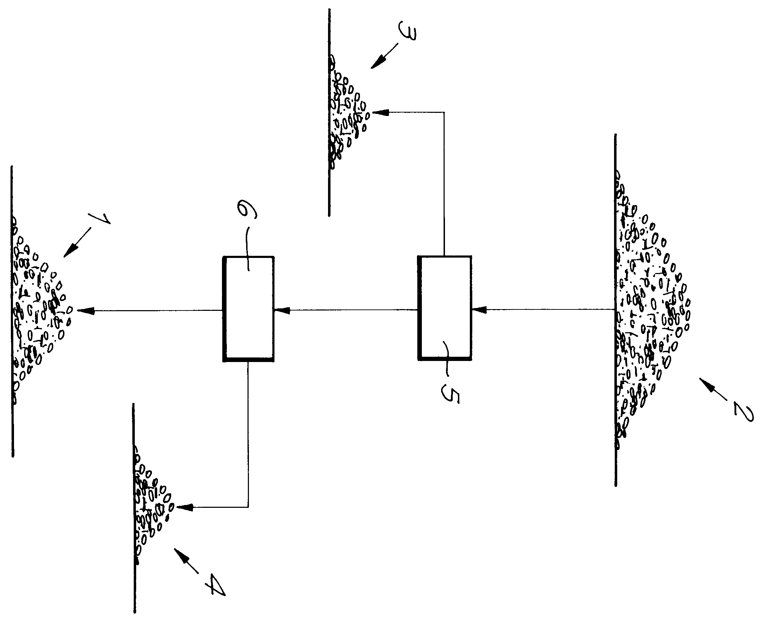

As shown in the accompanying figure, the fuel 1 according to the invention consists of what is called shredder waste 2 from which the inert materials 3 which are originally present in it, at any rate at least a number of the fine inert materials, as well as chlorous materials 4, at any rate at least the highly chlorous materials, have been mostly eliminated.

By eliminating the fine inert materials, the efficiency of combustion of the waste is considerably increased and the ash content is considerably decreased. By the above-mentioned inert materials is mainly understood stone, glass and earth.

Preferably, the fuel consists of a sieved product, as by sifting in a sieve installation 5, such as a drum screen or the like, the above-mentioned inert materials can be optimally eliminated.

Further, the fuel 1 is preferably also a product which is derived from shredder waste 2 and which is mainly free from the highly chlorous materials 4. These highly chlorous materials can hereby be separated in an installation 6 which provides for one or several treatments from the following series: dynamic flotation in what is called a whirl bath with water or another fluid, static flotation in a medium which has the density of the required separation threshold, or aerodynamic separation by means of an exhaust system.

The separation of highly chlorous materials 4 can also be done by means of manual sorting.

Moreover, an automatic separation can be provided for by means of a surface laser analysis, by means of X-rays or on the basis of colour detection.

The present invention is by no means limited to the embodiment described by way of example; on the contrary, such a fuel from shredder waste can be made in all sorts of variants while still remaining within the scope of the invention, for example by eliminating also other materials.

## Claims

1. Fuel, characterized in that it mainly consists of what is called shredder waste from which the inert materials which are originally present in it, at any rate at least a number of the fine inert materials (3), as well as chlorous materials, at any rate at least the highly chlorous materials (4), have been mostly eliminated.

2. Fuel according to claim 1, characterized in that it is mainly free of fine inert materials (3) which consist of stone, glass and earth.

3. Fuel according to claim 2, characterized in that the above-mentioned inert materials (3) are removed from it by means of sifting.

4. Fuel according to any of the above claims, characterized in that, in order to separate the highly chlorous materials, it underwent a treatment from the following series: dynamic flotation in what is called a whirl bath with water or another fluid, static flotation in a medium which has the density of the required separation threshold, or aerodynamic separation by means of an exhaust system.
